# EUROPEAN PATENT APPLICATION

(11) **EP 2 543 253 A1**
(43) Date of publication of application: **09.01.2013**
(21) Application number: 11191552.6
(22) Date of filing: 01.12.2011
(51) Int. Cl.: A21D 2/16, A23D 7/005, A23D 9/007, A23D 9/05

(54) **Use of a fat composition in a dough for bakery products and process for the preparation of said fat composition**

(30) Priority: 07.07.2011 MY 1103208
(71) Applicant: Sime Darby Malaysia Berhad, Kuala Lumpur, 50350 (MY)
(72) Inventor: Schaink, Hermanus Martinus, 3336 LE Zwijndrecht (NL); Berg, Hijlkeline Eppone, 3336 LE Zwijndrecht (NL); Pyett, Stacy, 6718 ZB Ede (NL); De Ruiter, Gerhard Adriaan, 3336 LE Zwijndrecht (NL)
(74) Representative: Jansen, Cornelis Marinus

(57) **Abstract**

The present invention relates to the use of a fat composition in a dough for bakery products. In addition, the present invention relates to a process for the preparation of bakery products, comprising preparing a dough by mixing flour, fat, sugar, salt, water and optional other dough constituents; forming said dough into a desired shape; and baking the shaped dough.

## Description

The present invention relates to the use of a fat composition in a dough for bakery products. In addition, the present invention relates to a process for the preparation of bakery products, comprising preparing a dough by mixing flour, fat, sugar, salt, water and optional other dough constituents; forming said dough into a desired shape; and baking the shaped dough.

In a preferred embodiment, the present invention relates to the afore-mentioned use of an edible product that is composed of a plurality of discrete fat pieces that are in direct contact with each other. These edible products can take the form of, for instance, fat flakes, fat powders or fat granulates. The discrete fat pieces comprised in the edible products of the invention contain appreciable levels of liquid oil. However, despite the presence of significant quantities of liquid oil, these discrete pieces do not tend to form clumps by sticking together.

Fat compositions used in the manufacture of farinaceous dough products usually contain high levels of saturated fatty acid residues (SAFA), *e.g.* 44% by weight of the total amount of fatty acid residues or more. Examples of fat components that are widely employed such dough fat compositions include butter oil, palm oil, palm kernel oil, coconut oil, hydrogenated vegetable oils and high melting stearin fractions of vegetable oils. A drawback of these fat components is the high amount of SAFA contained therein. It is generally accepted that fats having a high SAFA content, and consequently a low content of unsaturated fatty acids, do not fit in a healthy diet. It is an aim of the present invention to use a fat composition that meets consumers' demands for healthy, tasty bakery products with decreased saturated fat levels. Preferably, the invention aims to provide bakery products having saturated fat levels lower than 40%, more preferably, lower than 30%, and even more preferably, lower than 20% by weight of the total weight of fat. Such dough fats with decreased saturated fat levels must however still provide good processability, good sensory perception and good keeping qualities, such as a suitable shelf life.

US 4,891,233 describes a pastry making composition comprising, in combination, a premeasured amount of pastry-making flour, a premeasured amount of flakes of fat, said flakes of fat having a minimum solids content index (SCI) of about 50% at about 50 °F (10 °C), and a maximum SCI of about 10% at about 105 °F (40.6 °C), and a sufficient amount of a liquid fat generally distributed throughout the composition for coating at least portions of said flakes to promote adherence of said composition to facilitate making a pastry dough.

In said US patent it is explained that there are special requirements for a lower value for the SCI in the lower temperature range of 50 to 70 °F, which is referred to as the "agglomeration boundary", and an upper value in the upper temperature range of 85-105 °F which is referred to as the "appearance boundary". The agglomeration boundary is said to be determined by an SCI value range which first avoids the flakes of fat agglomerating together during storage and loosing their identify and second, provides flakes which are sufficiently malleable such that when incorporated into the baking ingredients at room temperature, they may be easily worked into the dough making composition. At the other end of the scale, the appearance boundary is defined by the necessity that the flakes of fat do not have too high of an SCI value at the upper temperatures, so that, when baked, the flakes of fat melt completely at the right time in the baking process to produce the desired pockets and flakiness, and thus avoid a "cratering" effect. The cratering effect is due to the fat not melting soon enough and due to gravity.

US 5,064,669 describes a process for preparing particulate flowable flavoring powders comprising: heating a high melting point normally solid encapsulating material having a melting point of 130-195 °F, and at least one emulsifier to melt the encapsulating material and emulsifier; admixing the melted encapsulating material and emulsifier; mixing at least one water-containing flavor composition containing at least 15% water with a texture conditioning agent which is a silicon dioxide, powdered cellulose, puffed dextrin, maltodextrin, or pregelatinized starch; mixing the flavor composition and texture conditioning agent with the molten mixture of encapsulating agent and emulsifier to obtain a homogeneous mixture in the form of an emulsion; and chilling the flavor composition-containing mixture to provide discrete particles of solid encapsulated flavoring agent, the encapsulating material and emulsifier being different.

US 6,531,173 describes a method of forming a food product which includes therein a hydrogenated fat, the method comprising: providing a spray of the food product in liquid form; contacting the spray with a cryogen for cooling the spray and effecting a rapid conversion of the liquid food product to a solid; and controlling a cooling rate of the cryogen contacting the spray for controlling the cooling of the food product.

The fat component of the afore-mentioned fat flakes and fat particles consists of a high melting fat. The use of liquid oils in these types of products is avoided as the introduction of liquid oil inherently increases the stickiness of the fat flakes or fat particles. Especially if the product is subjected to varying temperature conditions, fat flakes or fat particles containing appreciable levels of liquid oil will tend to stick together.

It will be understood, however, that from a health perspective it would be desirable to replace at least a part of the high melting fat in the aforementioned particulate edible products by a liquid oil containing substantial levels of unsaturated fatty acids. At the same time, it would often be desirable to ensure that the pieces making up the edible product do not clump together.

Particularly, in dough manufacture the use of fat compositions with lower levels of SAFA oils is associated with processability and taste problems. First of all, the use of significant amounts of low SAFA oils, such as sunflower oil and canola oil, normally yields a dough that is very sticky, especially during the first phase of the dough preparation process. In addition, low SAFA oils have the disadvantage that these are easily oxidised, especially during baking and subsequent storage. Oxidation of unsaturated vegetable oils leads to objectionable off-flavours that are often described as 'cardboard-like'.

The aim of the invention is reached by using a specific fat composition, containing encapsulated liquid oil.

In a first aspect, the present invention is directed to the use of a fat composition comprising
(i) a solid fat phase having a solid fat content at 20°C (N₂₀) of at least 2 wt. %;
(ii) 20-85 wt.%, drawn to the weight of the solid fat, of an oil encapsulate containing 40-95 wt. % liquid oil and 5-60 wt. % of an encapsulation matrix that envelops the liquid oil;
said fat composition containing at least 15% of liquid oil by weight of the solid fat; in a dough for bakery products in an amount of at least 6.5 wt.% ((i) + (ii), drawn to the weight of the dough). Preferred embodiments make use of at least 7 wt. %, more preferable at least 8 wt. %, and most preferably at least 10 wt. % of said fat composition ((i) and (ii)). In fact, the fat composition comprising (i) and (ii) is used as a dough fat, and especially a dough fat for the production of doughs for biscuits, pastries, cookies and cakes. Dough fats are tailored to provide a desired dough structure leading to suitable taste and mouthfeel characteristics in the products made there from. The individual fats required by the present invention can be first brought together to form one fat phase, or can be used separately in the sense that these are brought together when creating the dough.

In an additional embodiment, the present invention is directed to the use of the fat composition as defined in the previous paragraph in the production of bakery products that are yeast-free. In a preferred embodiment, this use is combined with the use of the first aspect, meaning that said fat composition is used in a yeast-free dough for bakery products in an amount of at least 6.5 wt.% ((i) + (ii), drawn to the weight of the dough).

The present invention, at least partially, elaborates on the invention described in the non-prepublished international patent application PCT/NL2011/050011, titled "An edible product composed of a plurality of discrete fat pieces". In a preferred embodiment, the present invention relates to the afore-mentioned use, wherein the fat composition is composed of a plurality of discrete fat pieces that are in direct contact with each other, each fat piece comprising
(i) 15-80 wt.% of a solid continuous fat phase having a solid fat content at 20°C (N₂₀) of at least 2 wt.%;
(ii) said oil encapsulate being homogeneously dispersed throughout the continuous fat phase;
(iii) 0-50 wt.% of a dispersed aqueous phase;
wherein the continuous fat phase, the oil encapsulate and the optional dispersed aqueous phase together represent at least 90 wt.% of the edible product. This fat composition is described in all details in said PCT/NL application.

As said herein-above, the invention also desires to lower the SAFA levels in bakery products. Hence, in a preferred use of the inventions, the total fat fraction has a saturated fatty acids content lower than 40 wt.%, and preferably lower than 30 wt. %, drawn to the weight of the total fat.

In a second aspect, the present invention relates to a process for the preparation of bakery products, comprising preparing a dough by mixing flour, fat, sugar, salt, water and optional other dough constituents; forming said dough into a desired shape; and baking the shaped dough, characterized in that the fat comprises the fat composition as defined in any one of the uses of the invention in an amount of at least 6.5 wt.% drawn to the weight of the dough.

In a preferred embodiment, the invention relates to a process, wherein the bakery product is yeast-free.

Unless indicated otherwise, both the terms "oil" and "fat" as used herein encompass lipids such as triglycerides, diglycerides, monoglycerides, free fatty acids and phosphoglycerides (*e.g.* lecithin).

The term "solid continuous fat phase" as used herein refers to a continuous fat phase that does not exhibit a tendency to flow at a temperature of 20°C.

The term "liquid oil" as used herein, refers to an oil that is pourable at 20°C.

The term "encapsulation matrix" as used herein encompasses all the materials within the oil encapsulate that envelop the liquid oil. Thus, in case the encapsulate contains multiple encapsulation layers, these layers together constitute the encapsulation matrix.

The term "fatty acid" as used herein encompasses free fatty acids as well as fatty acid residues contained in, for instance, triglycerides.

The N-value Nₜ equals the solid fat content of a fat at a temperature of t °C as measured by means of ISO 8292 - Animal and vegetable fats and oils - Determination of solid fat content - Pulsed nuclear magnetic resonance method.

Unless indicated otherwise, fatty acid concentrations are expressed as a percentage of the total weight of fatty acid residues and free fatty acids contained in the fat. The fatty acid concentrations are suitably determined by means of ISO 5509 - Animal and vegetable fats and oils - Preparation of methyl esters of fatty acids and ISO 5508 - Animal and vegetable fats and oils - Analysis by gas chromatography of methyl esters of fatty acids.

As explained herein before, in preferred embodiments the edible product to be applied in the use and process of the present invention can take the form of, for instance, flakes, a powder, a granulate or a collection of fat articles, such as fat sticks. Accordingly, the average weight of the individual discrete fat pieces can very widely, *e.g.* from 0.1 mg to 250 g. Preferably, the average weight of the individual discrete fat pieces lies within the range of 0.2 mg to 50 g. Even more preferably, the average weight of the aforementioned fat pieces is within the range of 1 mg to 10 g. Most preferably, said average weight is within the range of 5 mg to 1 g.

The discrete fat pieces in said edible product are preferably selected from flakes, beads, particles, discs, cubes, cylinders and sticks. More preferably, said fat pieces are selected from flakes, beads, discs, cubes and cylinders. Most preferably, the fat pieces contained in the preferred edible product for use in accordance with the present invention are flakes. Typically, the flakes have an average thickness in the range of 0.1-10 mm. More preferably, the flakes have an average thickness of 0.2-3 mm. The average length to thickness ratio of the flakes is usually within the range of 5:1 to 200: 1. Preferably, said ratio lies within the range of 8:1 to 100:1.

The continuous fat phase and the oil encapsulate together represent the bulk of the fat to be used in the use or process of the present invention. Typically, the continuous fat phase and the oil encapsulate are combined before being introduced in the dough making process. When combined the continuous fat phase and the oil encapsulate together represent at least 80 wt.% of the combined edible product, more preferably at least 90 wt.% of the edible product. Most preferably, the continuous fat phase and the oil encapsulate together represent at least 98 wt.% of the edible product.

The particle size of the oil encapsulate employed in accordance with the present invention can vary within a relatively wide range. Typically, the oil encapsulate has a weight averaged diameter of 0.02-500 µm. Preferably, the oil encapsulate has a weight averaged diameter of 0.05-20 µm, most preferably of 0.1-10 µm.

The oil encapsulates employed in accordance with the present invention advantageously have a high payload of liquid oil. Preferably, the oil encapsulate contains 40-90 wt.% of liquid oil and 10-60 wt.% of an encapsulation matrix. Even more preferably, the oil encapsulate contains 50-85 wt.% of liquid oil and 15-50 wt% of an encapsulation matrix.

The present invention enables the preparation of a non-clumping edible product that contains 40-1000% of liquid oil by weight of the continuous fat phase. Advantageously, the product contains 40-600% of liquid oil by weight of the continuous fat phase. Most preferably, the product contains 50-300% of liquid oil by weight of the continuous fat phase. The high loadings with liquid oil make the decrease in SAFA levels possible, yet do not lead to poor quality baking products.

The solid continuous fat phase (i) used in accordance with the present invention preferably contains at least 80 wt.% of fat. Even more preferably, the continuous fat phase contains at least 90 wt.%, most preferably at least 95 wt.% of fat. The fat contained in the aforementioned continuous fat phase typically contains at least 80 wt.% of triglycerides. More preferably said fat contains at least 90 wt.% of triglycerides. Most preferably, at least 95 wt.% of the fat contained in the continuous fat phase consists of triglycerides.

The fat contained in the continuous fat phase advantageously contains not more than a limited amount of unsaturated fatty acids, *e.g.* less than 40 wt.% of unsaturated fatty acids. Stickiness of the individual fat pieces can be minimized effectively by employing a continuous fat phase that contains only limited amounts of unsaturated fatty acids. Even more preferably, the continuous fat phase contains less than 30 wt.% of unsaturated fatty acids, most preferably less than 20 wt.% of unsaturated fatty acids.

The adverse effect of unsaturated fatty acids contained in the continuous fat phase is particularly pronounced in case these unsaturated fatty acids are largely present in the form of triglycerides that contain two or three unsaturated fatty acid residues, as opposed to triglycerides that contain only one unsaturated fatty acid residue. Preferably, less than 20 wt.% of the triglycerides contained in the continuous fat phase are triglycerides that contain two or three unsaturated fatty acid residues. Even more preferably, triglycerides containing two or three unsaturated fatty acid residues represent less than 10 wt.%, most preferably less than 5 wt.% of the triglycerides contained in the continuous fat phase.

In order to minimize the risk that fat pieces will clump together, it is preferred to employ a continuous fat phase having an N₂₀ of at least 8 wt.%, more preferably of at least 20 wt.% and most preferably of at least 30 wt.%.

In order to reduce the risk of clumping at elevated temperatures and/or as a result of temperature cycling, it is preferred to employ a continuous fat phase having a solid fat content at 30 °C (N₃₀) of at least 4 wt.%. More preferably, the continuous fat phase has an N₃₀ of at least 15 wt.%, most preferably of at least 25 wt.%.

The continuous fat phase of the fat pieces typically has a slip melting point in excess of 30 °C, more preferably in excess of 35 °C and most preferably in excess of 40 °C.

Examples of oils that may suitably be employed in the oil encapsulate of the present product - preferably in an amount of at least 80% by weight of the liquid oil - include fish oil, algae oil, sunflower oil, rapeseed oil, linseed oil, soybean oil, maize oil, olive oil, wheat germ oil, rice bran oil, grape seed oil, hazelnut oil, peanut oil and combinations thereof. More preferably, the latter oils are employed in an amount of at least 90%, most preferably at least 95% by weight of the liquid oil.

The bulk of the liquid oil contained in the oil encapsulate can consist of, for instance, triglycerides (*e.g*. vegetable oil), phospholipids (*e.g* algae oil) or free fatty acids, depending on the origin of the oil. The liquid oil contained in the oil encapsulate typically contains at least 80 wt.% of triglycerides. More preferably the liquid oil contains at least 90 wt.% of triglycerides. Most preferably, at least 98 wt.% of the liquid oil consists of triglycerides.

The liquid oil contained in the oil encapsulate advantageously contains a high amount of unsaturated fatty acids, *e.g*. at least 50 wt.% of unsaturated fatty acids. Even more preferably, the liquid oil contains at least 60 wt.% of unsaturated fatty acids, most preferably at least 70 wt.% of unsaturated fatty acids. The presence of significant levels of unsaturated fatty acids, especially of polyunsaturated fatty acids, increases the nutritional value of the present edible product in comparison to conventional products that consist of fats comprising low levels of unsaturated fatty acids.

Polyunsaturated fatty acids preferably represent a large fraction of the fatty acids contained in the liquid oil. Preferably, the liquid oil contains at least 30 wt.%, more preferably at least 40 wt.% and most preferably at least 50 wt.% of polyunsaturated fatty acids.

According to a particularly preferred embodiment of the present invention, the liquid oil contained in the oil encapsulate comprises at least 0.6%, more preferably at least 1.0% of ω3-polyunsaturated fatty acids. These ω3-polyunsaturated fatty acids are preferably selected from docosahexaenoic acid (DHA), eicosapentaenoic acid (EPA) and α-linolenic acid (ALA) and combinations thereof.

The liquid oil contained in the oil encapsulate typically has an N₂₅ of less than 5 wt.%. More preferably the liquid oil has an N₂₅ of less than 3 wt.%, most preferably an N₂₅ of less than 1 wt.%.

The fat pieces to be used in a preferred embodiment of the present invention may contain up to 50 wt.% of a dispersed aqueous phase. Preferably, the discrete fat pieces contain less than 30 wt.% of water, more preferably less than 10 wt.% of water, and most preferably less than 3 wt.% of water.

The encapsulation matrix of the oil encapsulate typically comprises at least 50 wt.% of biopolymer selected from the group consisting of proteins, polysaccharides, glycoproteins and combinations thereof. Even more preferably, the latter biopolymer represents at least 70 wt.%, most preferably at least 90 wt.% of the encapsulation matrix.

According to a particularly preferred embodiment, the biopolymer contained in the encapsulation matrix is selected from whey protein, whey protein hydrolysate, casein, caseinate, ovalbumin, hydrolysed ovalbumin, hydrolysed soy protein, gelatin, gums (*e.g*. gum Arabic), maltodextrin, modified starch, cellulose derivatives, galactomanans, alginates, pectins, carrageenans, chitosans, agar, gum arabic, locust bean gum, xanthans, starch, starch derivatives, fibers and combinations thereof. More preferably, the biopolymer is selected from whey protein, whey protein hydrolysate, casein, caseinate, gums and maltodextrin. Most preferably, the biopolymer is caseinate.

The fat composition to be used according to the present invention advantageously largely consists of fat and oil. Thus, in accordance with a particularly preferred embodiment, the continuous fat phase and the oil contained in the oil encapsulate together constitute at least 60 wt.%, more preferably at least 70 wt.% and most preferably at least 80 wt.% of the edible product.

Likewise, the encapsulation matrix preferably represents only a minor portion of the present edible product. Accordingly, the encapsulation matrix preferably represents less than 25 wt.%, more preferably less than 20 wt.%, and most preferably less than 15 wt.% of the edible product.

In accordance with another preferred embodiment, the fat pieces of the fat composition to be used are relatively hard as hard fat pieces tend to exhibit a reduced tendency to stick together. Preferably, the discrete fat pieces have a bulk hardness at 20°C of at least 100 g more preferably of at least 150 g and most preferably of at least 300 g The hardness of the fat pieces is largely determined by the nature of the continuous fat phase, and especially by the triglyceride composition of the continuous fat phase, as well as the interactions between the dispersed particles (H.M. Schaink et al., J. Rheol. 44, 473-498 (2000)). A person skilled in the art of fat technology has no problem formulating a fat blend that can be employed as a solid, continuous fat phase in the present edible product and that will impart a minimum bulk hardness as mentioned herein before. The bulk hardness of the fat pieces can suitably be measured by a texture analyser (Brookfield CT3, probe TA17, penetration depth 3mm).

Another aspect of the invention relates to a process for the preparation of bakery products, comprising preparing a dough by mixing flour, fat, sugar, salt, water and optional other dough constituents; forming said dough into a desired shape; and baking the shaped dough, characterized in that the fat comprises the fat composition as defined in any one of the preceding claims in an amount of at least 6.5 wt.% drawn to the weight of the dough. This process is conventional, except for the fat composition used.

The invention will be described in more detail in the following, nonlimiting examples.

### Example 1

About 1 kg of Goldbake® dough fat (room temperature; *ex* Sime Darby Unimills B.V., Zwijndrecht, the Netherlands) was placed in an ice cream machine and cooled down under stirring. After 15 minutes, the temperature of the dough fat was -1°C and the dough fat was stored in a fridge (7°C) before further use.

Biscuits were prepared with said dough fat containing 20 wt.% and 40 wt.% Vana-Crema® 78D (*ex* Friesland Foods Kievit B.V., Meppel; containing 78% high oleic sunflower oil) (the 20% and 40% being drawn to the weight of the fat fraction (dough fat + Vana-Crema)). A reference A was prepared without Vana-Crema; Variant 3 was prepared with an equivalent amount of sunflower oil as added with 40% encapsulates. The formulations are given in Table 1. About 1 kg of dough was prepared by mixing the fat, sugar, salt and water together in a Kenwood™ equipped with a K-beater for 5 minutes at speed level 1. The Vana-Crema was added at the same time as the Goldbake dough fat, just before blending in the Kenwood. After scraping the dough together, the flour and baking powder were added and mixed during 30 seconds at speed 1, followed by two times 3 minutes at speed 2 with in between inspection. No scraping off the sides of the bowl was necessary. The dough stuck together as one clump in all cases. Pieces of 20.0 g dough were carefully rolled by hand and pressed down to a height of 0.7 cm. Rounds were cut out of the dough using a 5 cm cookie cutter. The rounds (15) were placed on a baking tray with parchment paper and baked in the middle of the oven (low fan) at 165 °C for 30 minutes. The biscuits were cooled at room temperature and weighed afterwards.

The following results were obtained.

No scraping off the sides of the bowl was necessary. The dough stuck together as one clump in all cases. Pieces of 20.0 g dough were carefully rolled by hand and pressed down to a height of 0.7 cm. Rounds were cut out of the dough using a 5 cm cookie cutter. The rounds (15) were placed on a baking tray with parchment paper and baked in the middle of the oven (low fan) at 165 °C for 30 minutes. The biscuits were cooled at room temperature and weighed afterwards.

**Table 1. Formulation of biscuit dough (%, m/m).**

| Ingredients | (Reference A) | +20% encap | +40% encap | + equiv sunfl |
|---|---|---|---|---|
| | | (Variant 1) | (Variant 2) | (Variant 3) |
| Flour | 50 9 | 50 9 | 50 9 | 50 9 |
| Dough fat | 20 4 | 16 3 | 12 2 | 14 7 |
| Fat encapsulates | 0 0 | 4 1 | 8 2 | 0 0 |
| Sunflower oil | 0 0 | 0 0 | 0 0 | 5 7 |
| Sugar | 20 4 | 20 4 | 20 4 | 20 4 |
| Salt | 0 2 | 0 2 | 0 2 | 0 2 |
| Water | 7 6 | 7 6 | 7 6 | 7 6 |
| Baking powder | 0 5 | 0 5 | 0 5 | 0 5 |
| **Total** | **100.0** | **100.0** | **100.0** | **100.0** |

### Analysis of the biscuits:

### - Spread measurement

The diameter of five biscuits was measured using a ruler. The average and standard deviation was calculated.

### - Moisture loss

The moisture loss during baking was calculated by weighing all the dough rounds together before baking and weighing all the biscuits together after baking.

### - Texture Analysis

A snap (or bending) test was performed on the biscuits using a TA.XT Plus texture analyzer from Stable Micro Systems Ltd. The biscuits were placed on a ring (0 4.4 or 0 3.6, depending on the diameter of the biscuit) equipped with a 6 mm stainless steel probe (round). The force in compression was measured. The hardness was expressed as the maximum force. The resistance to bend or snap was expressed as the distance to fracture and is related to fracturability. The trigger force was set at 50 g with a test speed of 3.0 mm/s. Eight biscuits per variant were measured and the mean value and standard deviation calculated.

Table 2 shows the average diameter of the baked biscuits and moisture loss. Table 3 shows the results of the texture analysis.

**Table 2. Temperature of the dough, diameter and moisture loss of the biscuits**

| **Biscuit** | **Temperature dough (°C)** | **Average diameter +/-stand dev (cm)** | **Moisture loss (%, m/m)** |
|---|---|---|---|
| Reference | 24.4 | 5.66 +/- 0.05 | 14.7 |
| Variant 1 | 29.3 | 5. 52 +/- 0.04 | 14.9 |
| Variant 2 | 30.0 | 5.10 +/- 0.00 | 15.0 |
| Variant 3 | 30.4 | 5.48 +/- 0.08 | 14.8 |

**Table 3. Results of the texture analysis measurements.**

| **Biscuit** | **Hardness (N)** | **Fracturability (mm)** |
|---|---|---|
| Reference | 19.5 +/-2.1 | 0.980 +/- 0.287 |
| Variant 1 | 26.3 +/- 3.7 | 0.485 +/- 0.061 |
| Variant 2 | 55.9 +/- 5.2* | 0.921 +/- 0.081 |
| Variant 3 | 20.8+/-2.0 | 0.727+/- 0.178 |

| | | |
|---|---|---|
| n=3 | | |

These data show that the biscuits of the present invention have good baking behaviour and good processability. In addition, these biscuits have a good sensory perception and an acceptable shelf life. The biscuits made using variants 1 and 2 have a significant smaller drainage of liquid fat in comparison to variant 3.

## Claims

1. Use of a fat composition comprising
(i) a solid fat phase having a solid fat content at 20°C (N₂₀) of at least 2 wt. %;
(ii) 20-85 wt.%, drawn to the weight of the solid fat, of an oil encapsulate containing 40-95 wt.% liquid oil and 5-60 wt.% of an encapsulation matrix that envelops the liquid oil;
said fat composition containing at least 15% of liquid oil by weight of the solid fat; in a dough for bakery products in an amount of at least 6.5 wt.% ((i) + (ii), drawn to the weight of the dough).

2. Use according to claim 1, wherein the bakery products are yeast-free.

3. Use according to claim 1 or claim 2, wherein the fat composition is composed of a plurality of discrete fat pieces that are in direct contact with each other, each fat piece comprising
(i) 15-80 wt.% of a solid continuous fat phase having a solid fat content at 20°C (N₂₀) of at least 2 wt.%;
(ii) said oil encapsulate being homogeneously dispersed throughout the continuous fat phase;
(iii) 0-50 wt.% of a dispersed aqueous phase;
wherein the continuous fat phase, the oil encapsulate and the optional dispersed aqueous phase together represent at least 90 wt.% of the edible product.

4. Use according to any one of the preceding claims, wherein the total fat fraction has a saturated fatty acids content lower than 40 wt.%, and preferably lower than 30 wt. %, drawn to the weight of the total fat.

5. Use according to any one of the preceding claims, wherein the oil encapsulate has a weight averaged diameter of 0.02-500 µm.

6. Use according to any one of the preceding claims, where the oil encapsulate contains 40-90 wt. % of liquid oil and 10-60 wt. % of an encapsulation matrix.

7. Use according to any one of the preceding claims, wherein the liquid oil contains at least 70% of unsaturated fatty acids by weight of fatty acids.

8. Use according to any one of the preceding claims wherein the liquid oil contains at least 80 wt.% of oil selected from the group of fish oil, algae oil, sunflower oil, rapeseed oil, linseed oil, soybean oil, maize oil, olive oil, wheat germ oil, rice bran oil, grape seed oil, hazelnut oil, peanut oil and combinations thereof.

9. Use according to any one of the preceding claims, wherein the encapsulation matrix comprises at least 50 wt.% of biopolymer selected from the group consisting of proteins, polysaccharides, glycoproteins and combinations thereof.

10. Use according to claim 9, wherein the biopolymer is selected from whey protein, casein, caseinates, ovalbumin, hydrolysed ovalbumin, hydrolysed soy proteins, gelatin, gums, maltodextrin, modified starch, cellulose derivatives, galactomanans, alginates, pectins, carrageenans, chitosans, agar, gum arabic, locust bean gum, xanthans, starch, starch derivatives, fibers and combinations thereof.

11. Process for the preparation of bakery products, comprising preparing a dough by mixing flour, fat, sugar, salt, water and optional other dough constituents; forming said dough into a desired shape; and baking the shaped dough, **characterized in that** the fat comprises the fat composition as defined in any one of the preceding claims in an amount of at least 6.5 wt.% drawn to the weight of the dough.

12. Process according to claim 11, wherein the bakery product is yeast-free.
